# DEMANDE DE BREVET EUROPEEN

(11) **EP 1 619 095 A1**
(43) Date de publication de la demande: **25.01.2006**
(21) Numéro de dépôt: 05300588.0
(22) Date de dépôt: 13.07.2005
(51) Int. Cl.: B60S 1/34

(54) **Dispositif pour la commande et le pilotage d'un organe de nettoyage à balayage linéaire pour véhicule automobile**

(30) Priorité: 19.07.2004 FR 0451567
(71) Demandeur: Peugeot Citroen Automobiles SA, 78943 Vélizy-Villacoublay Cedex (FR)
(72) Inventeur: Vibert, Guillaume, F-78000 Versailles (FR); Jeuffe, Gérard, F-78810 Feucherolles (FR)

(57) **Abrégé**

Dispositif pour la commande et le pilotage d'un essuie-glace à balayage linéaire de la vitre arrière d'un véhicule automobile, adapté à un mécanisme comportant une vis sans fin (7), s'étendant parallèlement à la direction de balayage et étant entraînée en rotation sur elle-même au moyen d'un moteur électrique réversible (8), cette vis coopérant avec une noix filetée, solidaire d'un chariot (6) portant un balai d'essuie-glace, caractérisé en ce que la vis (7) comporte au moins un premier aimant permanent (12) disposé en regard d'un capteur (13) extérieur à la vis, délivrant un signal au passage de l'aimant à chaque tour de la vis, et un ensemble de contrôle (14) comportant un compteur mesurant le nombre de tours effectué par celle-ci, en fournissant, en fonction de la valeur du pas de la vis, la distance de déplacement du chariot vis-à-vis d'une position initiale correspondant à un repère de référence prédéterminé.

## Description

La présente invention est relative à un dispositif pour la commande et le pilotage d'un organe de nettoyage à balayage linéaire pour véhicule automobile.

L'invention s'applique notamment à un balai d'essuie-glace en contact avec la lunette arrière de ce véhicule, mais est plus généralement adaptable au balayage de tout vitrage ou miroir du genre en particulier d'un rétroviseur, présentant une surface plane ou galbée, contre ou au voisinage de laquelle se déplace en translation une raclette ou un gicleur projetant de l'eau sous pression.

Dans la suite de la description, pour ne pas compliquer celle-ci, il sera donc seulement fait référence à un balai d'essuie-glace à déplacement linéaire en appui sur la surface de la lunette arrière d'un véhicule, étant entendu que l'application de l'invention à d'autres supports s'en déduit immédiatement à l'aide de simples adaptations à la portée de l'homme de l'art, qui sont d'ailleurs par elles-mêmes sans incidence directe sur les caractéristiques propres du dispositif envisagé.

Les essuie-glace les plus usuels, notamment destinés au balayage de la vitre de la lunette arrière d'un véhicule, sont ordinairement agencés pour produire ce balayage par rotations alternées d'au moins un balai muni d'une lame souple en caoutchouc ou matériau similaire, ce balai étant entraîné directement autour d'un axe de commande par l'intermédiaire d'un embiellage ou organe de liaison analogue, les rotations alternatives de l'axe étant provoquées par un moteur réversible qui assure, par inversion de polarité de son alimentation électrique ou autre moyen équivalent, les déplacements de la lame souple en contact avec la vitre dans un sens, puis dans l'autre.

Or, ce système classique est mal adapté lorsque, selon la tendance actuelle des stylistes qui dessinent la forme des carrosseries des véhicules, la lunette arrière présente une hauteur relativement réduite, soit pour permettre d'accroître le volume du coffre situé sous cette lunette arrière, soit pour aménager la porte du hayon qui ouvre ce coffre en basculant autour d'un axe horizontal et qui porte elle-même la vitre arrière.

Si la surface de la vitre se rapproche ainsi d'un rectangle allongé transversalement, la surface nettoyée par un balai oscillant classique est faible, ce qui présente un sérieux inconvénient pour le conducteur qui n'a pas une vision convenable de la zone située derrière son véhicule.

On a donc déjà envisagé des dispositifs à balayage linéaire ou la lame du balai d'essuie-glace se déplace parallèlement à elle-même selon la direction transversale de la lunette et qui inverse le sens de son mouvement au voisinage des extrémités de celle-ci pour produire un balayage en va et vient au contact de la vitre.

A titre d'exemples de telles réalisations, on peut notamment citer les mécanismes décrits dans les brevets FR-2 732 287, FR-2 802 877, FR-2 809 788 ou encore DE 42 34 357 et USP 5 860 185.

Toutefois, ces réalisations font intervenir des structures mécaniques complexes, avec des moyens d'entraînement et de commande délicats à régler, et sont difficiles à réaliser avec un prix de revient qui ne soit pas excessif.

En effet, la difficulté essentielle à résoudre avec un tel mécanisme d'essuie-glace à balayage linéaire, provient du fait que, indépendamment de son mouvement alternatif de déplacement transversal, le balai de l'essuie-glace et le mécanisme qui l'entraîne doivent être agencés pour accommoder le profil généralement bombé de la vitre arrière à essuyer, de sorte que ce système doit intégrer des moyens propres à permettre un déplacement de ce balai perpendiculaire à la direction de son mouvement transversal contre le vitre pour suivre le galbe de celle-ci et maintenir un contact satisfaisant entre lui-même et la surface de cette vitre en tous points, d'un côté à l'autre de son étendue.

Les divers documents antérieurs précités envisagent des solutions qui, sous cet aspect de la question, se révèlent parfois inadaptés, souvent peu pratiques et généralement d'une fiabilité médiocre.

Pour pallier ces inconvénients, la Demanderesse a envisagé un mécanisme de balayage perfectionné dont les caractéristiques sont décrites et revendiquées dans d'autres demandes de brevets déposées ce jour à son nom et à laquelle la présente demande se réfère expressément.

L'invention concerne un dispositif de commande et de pilotage d'un tel mécanisme de balayage, de conception très simple et qui, au moyen d'un capteur de position unique, permet de contrôler les déplacements et les arrêts de l'essuie-glace en toutes circonstances au cours de son utilisation.

A cet effet, ce dispositif, adapté à un mécanisme comportant une vis sans fin, notamment en matière plastique pour lui conférer une relative souplesse, s'étendant parallèlement à la direction de balayage et étant entraînée en rotation sur elle-même au moyen d'un moteur électrique réversible, cette vis coopérant avec une noix filetée ou un alésage taraudé, solidaire d'un chariot portant un balai d'essuie-glace, se caractérise en ce que la vis comporte au moins un premier aimant permanent disposé en regard d'un capteur extérieur à la vis, délivrant un signal au passage de l'aimant à chaque tour de la vis, et un ensemble de contrôle comportant un compteur mesurant le nombre de tours effectué par celle-ci, en fournissant, en fonction de la valeur du pas de la vis, la distance de déplacement du chariot vis-à-vis d'une position initiale correspondant à un repère de référence prédéterminé.

L'intérêt de décaler la position d'arrêt du chariot par rapport au capteur réside dans la détection sûre d'un blocage accidentel du chariot, même lorsque celui-ci est près du repère de référence.

En effet, s'il est relativement aisé de détecter un tel blocage dans une position éloignée du chariot, par exemple en mesurant le fréquence du signal délivré par le capteur, cette mesure est plus difficile en position rapprochée où le capteur ne délivre aucun signal.

En cas de fonctionnement anormal, à proximité de la position de référence, le capteur ne délivre pas à l'ensemble de contrôle les signaux correspondants aux tours complémentaires de la vis, lui permettant de distinguer et de discriminer l'arrivée normale du chariot à la position de référence vis-à-vis de la situation qui résulte d'un blocage de ce chariot sur la vis.

Avantageusement, le capteur extérieur à la vis est du type à effet Hall.

Dans un mode de réalisation préféré de l'invention, l'aimant permanent est directement fixé en un point donné de la surface extérieure de la vis en regard du capteur, ce point étant localisé de sorte que le passage du chariot devant l'aimant, consécutivement à la rotation de la vis, en le cachant à la vue du capteur, provoque une absence de signal délivré par le capteur à l'ensemble de contrôle, lequel peut commander dans un laps de temps donné au-delà l'arrêt du moteur électrique, de préférence après un nombre limité de tours complémentaires de la vis et l'immobilisation du chariot dans une position légèrement décalée vis-à-vis du capteur, exactement définie par rapport au repère de référence.

Avantageusement, le nombre de tours complémentaires de la vis est au moins égal à deux.

Dans un autre mode de réalisation, le premier aimant est monté dans une position extérieure à la vis, le chariot comportant une extension latérale propre à cacher l'aimant vis-à-vis du capteur.

Dans encore une autre variante, le chariot comporte un second aimant permanent, de polarité inverse de celle du premier aimant porté par la vis, le signal fourni au capteur par le passage en regard de celui-ci du second aimant provoquant l'arrêt du moteur électrique et l'immobilisation du chariot dans une position exactement définie par rapport au repère de référence.

Avantageusement, le dispositif comporte un second repère de référence fixe, prévu à l'opposé du premier repère selon le sens de déplacement du chariot sur la vis, apte à provoquer l'inversion du sens de rotation du moteur électrique de manière à réaliser l'entraînement du chariot sur la vis en sens opposé, en fin de course de balayage de la vitre.

Le cas échéant, notamment pour produire un balayage temporisé, séparé par des périodes d'arrêt, la commande de déplacement du chariot vis-à-vis de la position initiale est définie alternativement par le premier puis le second repères de référence.

Selon encore une autre caractéristique, pour mise hors service du dispositif en fin d'utilisation, l'ensemble de contrôle comporte un moyen propre à délivrer un signal additionnel au moteur d'entraînement de la vis de manière à provoquer un déplacement du chariot portant le balai d'essuie-glace au-delà de la position d'arrêt définie par le repère de référence.

De préférence également, l'ensemble de contrôle comporte des moyens pour discriminer l'immobilisation du chariot due à l'arrêt du moteur électrique commandé par le capteur, de celle provoquée par un freinage et un blocage accidentel du chariot.

Dans un mode de réalisation optionnel, ces moyens consistent à mesurer la fréquence des impulsions délivrées par le capteur à chaque passage en regard du premier aimant au-delà de la position initiale correspondant au repère de référence et à la comparer à un seuil fixe prédéterminé.

D'autres caractéristiques d'un dispositif pour la commande et le pilotage d'un ensemble de balayage linéaire pour la vitre arrière d'un véhicule automobile, apparaîtront encore à travers la description qui suit d'exemples de réalisation, donnés à titre indicatif et non limitatif, en référence aux dessins annexés sur lesquels :
- La Figure 1 est un schéma illustrant la structure générale du mécanisme d'essuie-glace commandé par le dispositif selon l'invention.
- La Figure 2 illustre schématiquement, à plus grande échelle, selon un premier mode de réalisation, la vis d'entraînement du mécanisme avec les moyens associés à cette vis pour permettre d'assurer la commande de sa rotation.
- Les Figures 3 et 4 sont des diagrammes illustrant le signal reçu par le capteur, respectivement lors du déplacement du chariot portant le balai d'essuie-glace d'une première position à une seconde position opposée, et vice-versa.
- Les Figures 5 et 6 sont des vues analogues à la Figures 2, relatives à deux variantes de réalisation.

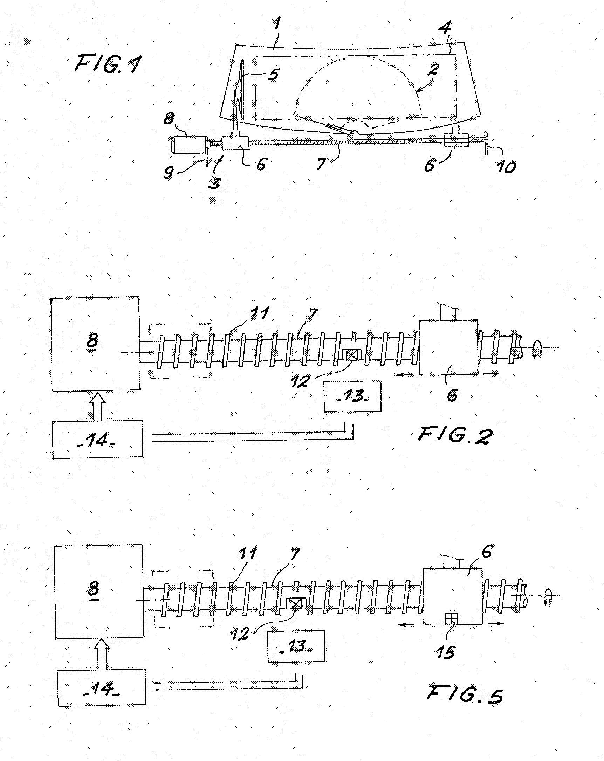

Sur la Figure 1, on a très schématiquement représenté la lunette arrière 1 d'un véhicule automobile, laquelle présente une dimension transversale sensiblement supérieure à celle de sa hauteur, de telle sorte que l'utilisation d'un système d'essuie-glace classique à balai oscillant, globalement désigné sous la référence 2, se révèle mal adaptée et d'une efficacité insuffisante en raison de la faible surface balayée, conduisant à l'usage préféré d'un mécanisme à déplacement linéaire 3, apte à essuyer une surface 4 de la vitre 1 très notablement supérieure à celle concernée par le système 2.

Le mécanisme 3 comporte principalement un balai d'essuie-glace 5, en appui sur la vitre 1 et qui s'étend sensiblement selon la direction de la hauteur de cette vitre, ce balai 5 étant solidaire d'un chariot 6 comportant une noix interne filetée (non représentée), apte à coopérer avec une vis sans fin 7, disposée perpendiculairement à la direction du balai et donc selon la dimension transversale de la vitre, cette vis étant entraînée en rotation sur elle-même par un moteur réversible 8.

La vis 7, de préférence réalisée en matière plastique afin de lui conférer une relative souplesse dans le sens transversal, est supportée à ses extrémités par deux paliers parallèles, respectivement 9 et 10.

De façon plus spécialement décrite dans les demandes de brevets au nom de la Demanderesse, déposées ce jour simultanément avec la présente demande, le chariot 6 comporte des moyens permettant au balai d'essuie-glace 5 de suivre de façon permanente le profil extérieur usuellement bombé de la vitre 1, le moteur réversible 8 étant agencé afin que, par inversion de polarité de son alimentation électrique, il puisse entraîner le chariot 6 en va et vient d'une extrémité à l'autre de la vis sans fin 7, afin de produire le balayage de la vitre sur toute l'étendue de sa surface 4, sensiblement au-delà des limites imposées au système 2 à balai oscillant.

Conformément à l'invention et dans un premier mode de réalisation tel qu'illustré sur la Figure 2, le dispositif de commande et de pilotage du balai d'essuie-glace 5 porté par le chariot 6, dont la noix interne (non représentée) est en prise avec le filetage 11 de la vis sans fin 7, utilise un premier aimant permanent 12, disposé sur la surface extérieure de la vis ou dans un logement spécialement réservé à cet effet, cet aimant étant placé en regard direct d'un capteur 13, notamment du genre capteur à effet Hall.

Grâce à la position relative de l'aimant 12 et du capteur 13, se faisant ainsi mutuellement face, le passage de l'aimant entraîné avec la vis à chaque tour de celle-ci, provoque l'émission par le capteur d'un signal impulsionnel reçu par un ensemble de contrôle 14, comportant un compteur propre à mesurer dans ces conditions le nombre de tours effectué par la vis lorsque celle-ci est entraînée en rotation continue sur elle-même par le moteur réversible 8.

Connaissant le nombre de tours réalisé et le pas de la vis, l'ensemble de contrôle 14 peut ainsi déterminer de manière précise la distance de déplacement sur cette vis 7 du chariot 6, et en particulier de connaître exactement sa localisation selon sa longueur, à partir d'une position de référence initiale prédéterminée.

Afin de mesurer exactement cette localisation du chariot par rapport à la position de référence ainsi déterminée, et plus particulièrement permettre l'arrêt du chariot 6 en une position initiale précise pour chaque course de balayage de la vitre par le balai porté par ce chariot, ce dernier est directement utilisé pour masquer temporairement l'aimant 12 à la vue du capteur 13, en particulier lorsque ce chariot, au cours de son déplacement sur la longueur de la vis 7 en fin de course, s'interpose entre cet aimant et ce capteur.

A cet instant précis en effet, le capteur n'émet plus de signal vers l'ensemble de contrôle 14, ce qui permet de le détecter immédiatement. L'ensemble 14 est de plus avantageusement conçu afin de permettre, au-delà de cet instant et au moyen d'une temporisation appropriée, que le moteur 8 continue à entraîner la vis 7 sur un nombre limité de tours complémentaires, afin que le chariot 6 et par suite le balai d'essuie-glace 5 qu'il supporte, soit finalement arrêté dans une position légèrement décalée par rapport à celle où le capteur, du fait de l'interposition du chariot, ne voit plus l'aimant.

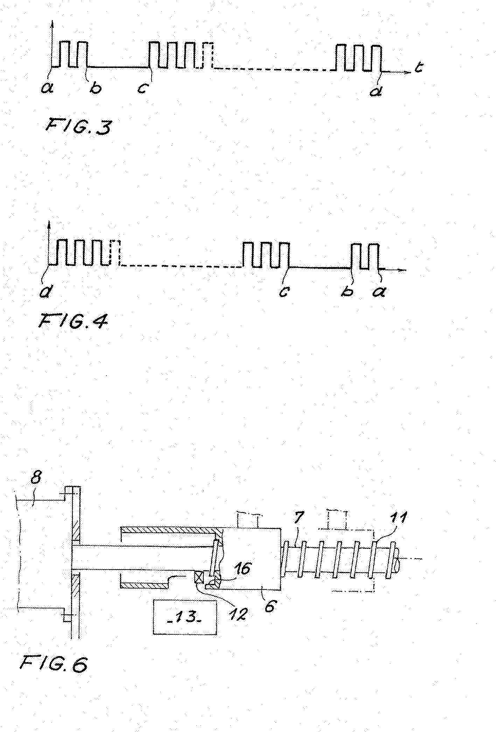

Le diagramme de la Figure 3 représente le signal impulsionnel reçu par le capteur 13 en provenance de l'aimant 12 à chaque tour de la vis 7.

Sur ce diagramme qui porte le temps t en abscisses, on a représenté en a la position dans laquelle le moteur 8 d'entraînement de la vis 7 est arrêté après un nombre complémentaire de tours de la vis à partir de l'instant b qui marque la fin de la période de temps où le capteur 13 est masqué par le passage du chariot 6, l'instant c représentant le début de cette période et l'instant d figurant le moment où, après le nombre de tours de vis nécessaire, le chariot atteint l'extrémité opposée de la vis, après un nombre de tours exactement déterminé de celle-ci, à partir de la position de référence qui correspond ici à l'instant a.

Lorsque le chariot atteint l'extrémité opposée de la vis 7, l'ensemble de contrôle 14 provoque l'inversion du sens de rotation du moteur et le retour du chariot 6 sur la vis en sens inverse, jusqu'à ce qu'il masque à nouveau l'aimant 12 et produise l'arrêt final du moteur 8 après le nombre de tours de vis complémentaires, choisi par construction.

Avantageusement, ce nombre de tours complémentaires est de l'ordre de deux mais pourrait être différent, permettant dans tous les cas l'arrêt de la vis 7 et par suite du balai 5 porté par le chariot 6 dans une position légèrement décalée, au-delà de la position de référence.

La Figure 4 illustre le signal produit par le capteur 12 vers l'ensemble de contrôle 14 au cours du trajet de retour du chariot 6 sur la vis 7, ce signal étant exactement inversé par rapport à celui créé lors du déplacement en sens inverse, tel que représenté sur la Figure 3.

Avantageusement, le dispositif selon l'invention est agencé de manière à créer un second repère de référence, correspondant ici à l'instant d, à l'opposé du premier selon le sens de déplacement du chariot 6, pour provoquer dans les conditions précitées l'inversion du sens de rotation du moteur électrique 8.

En particulier, les deux repères de référence, correspondant ainsi aux instants a et d sur les diagrammes des Figures 3 et 4, peuvent être utilisés successivement pour commander les déplacements alternatifs du chariot sur la vis avec un fonctionnement temporisé, où les périodes de balayage dans un sens, puis dans l'autre, sont séparées par des périodes d'arrêt, la distance de déplacement du chariot vis-à-vis de la position initiale au cours de chacune de ces périodes étant définie alternativement par le premier, puis le second repères de référence.

La Figure 5 illustre une autre variante de réalisation, pour laquelle on a repris des chiffres de référence identiques pour désigner les mêmes organes, notamment le chariot 6, la vis sans fin 7 avec son moteur d'entraînement 8, l'aimant permanent 12, le capteur à effet Hall 13 disposé en regard de cet aimant et l'ensemble de contrôle 14 agissant sur l'alimentation du moteur 8.

Dans cette variante, le chariot 6 est muni d'un second aimant permanent 15, dont la polarité est inverse de celle du premier aimant 12.

Le capteur à effet Hall 13 voit donc le passage du premier aimant 12 à chaque tour de vis en permettant de connaître le nombre de tours effectué et par suite la distance de déplacement du chariot 6.

Dans cette variante, la détermination de la position initiale correspondant au repère de référence, est obtenue par passage du second aimant 15 porté par le chariot 6 devant le capteur 13 et détection de l'inversion de polarité correspondante, l'arrêt du moteur 8 étant assuré, comme dans la variante précédente, après un nombre limité de tours complémentaires de la vis afin de décaler légèrement le chariot avant mise hors service de l'essuie-glace.

Dans la variante illustrée sur la Figure 6, le chariot 6 entoure partiellement le premier aimant permanent 12 et comporte une extension latérale 16, propre à cacher l'aimant 12 vis-à-vis du capteur 13 au voisinage de la position initiale définie par le repère de référence, l'arrêt final du moteur étant assuré, comme précédemment, après un nombre limité de tours complémentaires de la vis 7.

Le dispositif selon l'invention comporte par ailleurs, prévus dans l'ensemble de contrôle 14, des moyens additionnels permettant de distinguer si l'arrêt de la rotation de la vis 7 et l'entraînement corrélatif du chariot 6, résultent d'un arrêt commandé du moteur par le signal issu du capteur 13 dans les conditions envisagées dans les divers exemples qui précèdent, ou bien sont dus à un blocage accidentel du balai d'essuie-glace, par exemple si ce balai est immobilisé par une accumulation de givre sur la vitre de la lunette arrière ou le cas échéant, rencontre un obstacle qui s'oppose à son déplacement.

De préférence, ces moyens consistent en un organe de mesure de la fréquence des impulsions du signal délivré par le capteur 13 à chaque passage en regard du premier aimant 12, au-delà de la position initiale définie à partir du repère de référence, et à comparer cette fréquence à un seuil fixe prédéterminé, l'abaissement de la fréquence en dessous de ce seuil caractérisant un tel blocage.

On réalise ainsi un dispositif pour la commande et le pilotage d'un essuie-glace à balayage linéaire de la vitre arrière d'un véhicule automobile, de conception simple et d'une grande efficacité. Bien entendu, il va de soi que l'invention ne se limite pas aux exemples de réalisation plus spécialement décrits et représentés ; elle en embrasse au contraire toutes les variantes et en particulier s'appliquer à la commande du déplacement linéaire d'un organe de nettoyage quelconque au contact ou à proximité de toute autre vitre, miroir ou surface similaire du véhicule.

De plus, l'ensemble de contrôle peut également comporter un moyen complémentaire apte à délivrer un signal additionnel vers le moteur d'entraînement de la vis sans fin, de manière à provoquer le déplacement du chariot portant le balai d'essuie-glace au-delà de sa position d'arrêt définie par le repère de référence, en particulier lorsqu'il s'agit de mettre le mécanisme hors service, le balai étant ainsi amené au voisinage d'un des bords latéraux de la vitre, à droite ou à gauche selon le cas, en dehors de la zone balayée en fonctionnement normal.

## Revendications

1. Dispositif pour la commande et le pilotage d'un organe de nettoyage à balayage linéaire pour véhicule automobile, notamment d'un balai d'essuie-glace, adapté à un mécanisme comportant une vis sans fin (7), notamment en matière plastique pour lui conférer une relative souplesse, s'étendant parallèlement à la direction de balayage et étant entraînée en rotation sur elle-même au moyen d'un moteur électrique réversible (8), cette vis coopérant avec une noix filetée ou un alésage taraudé, solidaire d'un chariot (6) portant un balai d'essuie-glace, **caractérisé en ce que** la vis (7) comporte au moins un premier aimant permanent (12) disposé en regard d'un capteur (13) extérieur à la vis, délivrant un signal au passage de l'aimant à chaque tour de la vis, et un ensemble de contrôle (14) comportant un compteur mesurant le nombre de tours effectué par celle-ci, en fournissant, en fonction de la valeur du pas de la vis, la distance de déplacement du chariot vis-à-vis d'une position initiale correspondant à un repère de référence prédéterminé.

2. Dispositif selon la revendication 1, **caractérisé en ce que** le capteur (13) extérieur à la vis (7) est du type à effet Hall.

3. Dispositif selon l'une des revendications 1 ou 2, **caractérisé en ce que** l'aimant permanent (12) est directement fixé en un point donné de la surface extérieure de la vis (7) en regard du capteur (13), ce point étant localisé de sorte que le passage du chariot devant l'aimant consécutivement à la rotation de la vis, en le cachant à la vue du capteur, provoque une absence de signal délivré par le capteur à l'ensemble de contrôle (14), lequel peut commander dans un laps de temps donné au-delà l'arrêt du moteur électrique (8), de préférence après un nombre limité de tours complémentaires de la vis, et l'immobilisation du chariot dans une position légèrement décalée vis-à-vis du capteur, exactement définie par rapport au repère de référence.

4. Dispositif selon la revendication 3, **caractérisé en ce que** le nombre de tours complémentaires de la vis (7) est au moins égal à deux.

5. Dispositif selon l'une des revendications 1 ou 2, **caractérisé en ce que** le premier aimant permanent (12) est monté dans une position extérieure à la vis (7), le chariot (6) comportant une extension latérale (16) propre à cacher l'aimant vis-à-vis du capteur.

6. Dispositif selon l'une des revendications 1 ou 2, **caractérisé en ce que** le chariot (6) comporte un second aimant permanent (15), de polarité inverse de celle du premier aimant permanent (12) porté par la vis (7), le signal fourni au capteur (13) par le passage en regard de celui-ci du second aimant provoquant l'arrêt du moteur électrique (8) et l'immobilisation du chariot dans une position exactement définie par rapport au repère de référence.

7. Dispositif selon l'une quelconque des revendications 1 à 6, **caractérisé en ce qu'**il comporte un second repère de référence fixe, prévu à l'opposé du premier repère selon le sens de déplacement du chariot (6) sur la vis (7), apte à provoquer l'inversion du sens de rotation du moteur électrique (8) de manière à réaliser l'entraînement du chariot sur la vis en sens opposé, en fin de course de balayage de la vitre.

8. Dispositif selon la revendication 7, **caractérisé en ce que**, notamment pour produire un balayage temporisé, séparé par des périodes d'arrêt, la distance de déplacement du chariot (6) vis-à-vis de la position initiale est définie alternativement par le premier puis le second repères de référence.

9. Dispositif selon l'une quelconque des revendications 1 à 8, **caractérisé en ce que**, pour mise hors service en fin d'utilisation, l'ensemble de contrôle (14) comporte un moyen propre à délivrer un signal additionnel au moteur électrique (8) d'entraînement de la vis de manière à provoquer un déplacement du chariot (6) au-delà de la position d'arrêt définie par le repère de référence.

10. Dispositif selon l'une quelconque des revendications 1 à 9, **caractérisé en ce que** l'ensemble de contrôle comporte des moyens pour discriminer l'immobilisation du chariot (6) dû à l'arrêt du moteur électrique (8) commandé par le capteur (13), de celui provoqué par un freinage ou un blocage accidentel du chariot (6).

11. Dispositif selon la revendication 10, **caractérisé en ce que** les moyens pour discriminer l'immobilisation du chariot (6) consistent à mesurer la fréquence des impulsions délivrées par le capteur (13) à chaque passage en regard du premier aimant permanent (12) au-delà de la position initiale correspondant au repère de référence et à la comparer à un seuil fixe prédéterminé.
